# EUROPEAN PATENT APPLICATION

(11) **EP 2 806 324 A1**
(43) Date of publication of application: **26.11.2014**
(21) Application number: 13738048.1
(22) Date of filing: 15.01.2013
(51) Int. Cl.: G05D 1/02

(54) **DELIVERY ROUTE PLANNING SYSTEM**

(30) Priority: 16.01.2012 JP 2012006155
(71) Applicant: Hitachi, Ltd., Tokyo 100-8280 (JP)
(72) Inventor: NONAKA, Yoichi, Tokyo 100-8280 (JP); NAKANO, Takahiro, Tokyo 100-8280 (JP); KANEKO, Junichi, Saitama 338-8570 (JP)
(74) Representative: Calderbank, Thomas Roger
(86) International application number: PCT/JP2013/050569
(87) International publication number: WO 2013/108749

(57) **Abstract**

A technique enabling automatic and high-speed calculation of an efficient path or others in which an object and a surrounding structure do not interfere with each other is provided. In a carry-in path planning system 1, a main calculation device 10 has a path planning function of calculating an efficient path including a posture of the object in which an object (31) and a surrounding structure (30) do not interfere with each other. A mobile terminal 20 has a GUI display function of providing a GUI screen of the path planning function. The path planning function uses object data, structure data, carry-in apparatus data, or others, drafts a plurality of path candidates each connecting a start point to an end point, drafts a plurality of posture candidates in accordance with a position of the object on the path, determines an interference state between the object and the surrounding structure of the object for the path candidate and the posture candidate, and outputs information of one or more efficient paths including the posture of the object in which the object and the surrounding structure of the object do not interfere with each other, based on a result of the determination.

## Description

### TECHNICAL FIELD

The present invention relates to a technique for computer information processing, and, more particularly, the present invention relates to a technique for planning, by calculation, a path through which an object such as a component, a material, and an apparatus is carried in and out from a space/structure such as a building.

### BACKGROUND ART

For example, in construction of a plant, etc., preventive maintenance thereof, and others, such an operation as carrying out of old components, carrying in of new components, and installation/setting at a predetermined position are performed. At this time, interference/contact between an object such as a component to be carried in and out and a target space/structure (also referred to as surrounding structure) to/from which the object is carried in/out frequently occurs, and therefore, the interference/contact can be a bottleneck in view of the construction or others due to congestion as a result of the interference/contact. That is, this leads to such a problem as high cost and increase in construction period due to insufficiency of the carrying in/out.

As a prior art example related to path planning, Japanese Patent Application Laid-Open Publication No. H06-168303 (Patent Document 1) is cited.

Patent Document 1 ("Method for Supporting Installation Plan" and others) describes as follows. The method supports an installation plan in which an optimal installation procedure for numerous installation minimum units can be easily reviewed. The method divides layout format information into installable minimum units, and outputs, by using a calculator, the correspondence of operation steps for the installation minimum units, the display of a carry-in path, interference check, calculation of operation time, etc., and the animated display, and the optimized installation procedure or others obtained from the review results of them. The method can efficiently create an installation procedure plan for an efficient and safe installation operation.

### PRIOR ART DOCUMENT

### PATENT DOCUMENT

Patent Document 1: Japanese Patent Application Laid-Open Publication No. H06-168303

### DISCLOSURE OF THE INVENTION

### PROBLEMS TO BE SOLVED BY THE INVENTION

A desirable issue is to achieve, for example, reduction in the cost of the plant construction, shortening of the period thereof, the prevention maintenance thereof, and others by reducing the inefficiency due to the above-described interference between the object to be carried in and out and the structure to increase the sufficiency of the fitting/rigging/removing operation. For this issue, in, for example, an information processing system such as a design system and a construction management system such as CAD, CAM, and CAE, it is desired to achieve a function of automatically planning and calculating a path through which the object can be carried in and out and installed efficiently without interfering with the surrounding structure.

In the function of the path plan, it is particularly desired to achieve a function of calculating an optimal path automatically at high speed also in consideration of which path the object can be moved through and what posture (at what angle) the object can be moved in without the interference with the surrounding structure.

And, although the fitting/rigging/removing operation conventionally significantly relies on experiences of a person or others, it is particularly desired to achieve an effective operational support or others by providing a GUI (Graphical User Interface) for displaying the above-described non-interference path or others to be understandable on a screen viewed by a user such as an operator, that is, a screen of a mobile terminal.

As described above, a main aim of the present invention is to provide a technique capable of automatically calculating an efficient path and object posture at high speed without interference between the object and a surrounding structure in a technique of planning a path through which the object is carried in and out from a space/structure by calculation. This technique can reduce the cost and shorten the period in such an application as the plant construction including the operation of carrying the object in and out from the space/structure.

### MEANS FOR SOLVING THE PROBLEMS

A typical embodiment of the present invention is a system (carry-in path planning system) or others that plans a path through which an object is carried in and out from a space/structure by calculation using computer information processing, and has a feature having the following configuration.
(1) The present system has a function (referred to as path planning function) of automatically calculating an efficient carry-in path (note that a case of a carry-out path is the same) containing a posture of the object without interference between the object and a surrounding structure. Also, the system provides a method of computation processing in accordance with the function, an information processing device configuring the present system, and a program for achieving the function.
(2) The present system has a function (referred to as GUI display function) of providing a GUI for easily handling the path planning function by a user operation. More particularly, the system provides a function of displaying a GUI screen including information of the above-described path on the screen of the user's mobile terminal. Also, the system provides a calculation processing method, an information processing device, a program, etc., in accordance with the function.
(3) The present system is configured as, for example, a system used when the user such as a designer previously designs/plans a carry-in path. In a case of this application, a relatively long calculation time is allowed. The present system has a calculation device having a path planning function of performing a planning processing of the efficient path based on design data (containing data of a three-dimensional shape of an object, a structure, etc.) and has a GUI display function of displaying information containing the path resulting from the planning on the screen for the user.
(4) The present system is configured as, for example, a system capable of checking a target structure on site or remotely the carry-in/out path by viewing a screen by the user such as a person who executes or instructs an operator to perform the fitting/rigging/removing operation. In a case of this application, a relatively short calculation time is required. The present system has a calculation device having the path planning function of performing a planning processing of the efficient path based on design data (containing data of a three-dimensional shape of the object, the structure, etc.) and has a mobile terminal having the GUI display function of displaying information containing the path resulting from the planning on the screen for the user.
(5) This system has, for example, such a configuration that a unique calculation processing for achieving high-speed calculation of the path planning is executed. More specifically, the present system is provided with, for example, a CPU, a GPGPU (general-purpose calculation by a GPU and a computer for the calculation), or others as a main calculation device, and performs a processing for parallely calculating a lot of paths/candidates and a lot of postures/candidates such as a processing for calculation including a check processing of a state of interference between the object and the surrounding structure by a parallel computation processing using the GPGPU based on an instruction from the CPU.

The path planning function (more particularly, a path draft unit) performs, for example, a processing for drafting a plurality of paths/candidates each having a state in which a three-dimensional shape of the object and a three-dimensional shape of the surrounding structure do not interfere with each other by using parallel computation by the GPGPU.

The path planning function performs, for example, a processing for drafting a plurality of postures/candidates having a state in which a posture of the object and the surrounding structure do not interfere with each other for each of the plurality of paths/candidates by using parallel computation by the GPGPU.

The path planning function (more particularly, an interference check unit) performs, for example, a processing for judging or checking the interference state between the object and the surrounding structure for the paths/candidates including the posture/angel by using parallel computation by the GPGPU.

The path planning function (more particularly, an optimal evaluation unit) performs, for example, a processing for selecting an optimal path such as a path having a posture change as small as possible through a predetermined target function for the paths/candidates including the posture/angel by using parallel computation by the GPGPU.

### EFFECTS OF THE INVENTION

According to a typical embodiment of the present invention, in a technique for planning a path through which an object is carried in and out from a space/structure by using calculation, an efficient path, posture of the object, and others without interference between the object and a surrounding structure can be calculated automatically at high speed. This manner can reduce a cost and shorten a period in such an application as plant construction containing operation of carrying the object in and out from a space/structure.

### BRIEF DESCRIPTIONS OF THE DRAWINGS

FIG. 1 is a diagram illustrating an example of an entire configuration of a system (including a carry-in path planning system) according to an embodiment of the present invention;
FIG. 2 is a diagram illustrating an example of a hardware configuration of the system of FIG. 1;
FIG. 3 is a diagram illustrating a functional block configuration of a main calculation device, a schematic process flow thereof, processing data information thereof, and others;
FIG. 4 is a diagram illustrating an example of a first GUI display screen of a mobile terminal;
FIG. 5 is an explanatory diagram of a total path and a partial path;
FIG. 6 is an explanatory diagram illustrating a schematic flow of an operation and a processing in a case of planning using a spatial-data acquisition device;
FIG. 7 is a diagram illustrating a configuration example for increasing a speed of a path planning processing and a GUI screen display processing by parallel processing in a main calculation device;
FIG. 8 is a diagram illustrating a configuration example for parallel computation processing using a GPGPU in the main calculation device;
FIG. 9 is a diagram illustrating an example of a process flow in a method of performing a path planning processing by a single CPU using the main calculation device (without the GPGPU);
FIG. 10 is a diagram illustrating an example of a process flow in a method of performing the path planning processing by using parallel computation processing using the main calculation device (with the GPGPU);
FIG. 11 is an explanatory diagram illustrating an example of a Voronoi space created by a path draft processing;
FIG. 12 is a diagram illustrating an example of a second GUI display screen of the mobile terminal;
FIG. 13 is a diagram illustrating an example of a third GUI display screen of the mobile terminal;
FIGs. 14A to 14C are explanatory diagrams each illustrating expression examples of angles for defining posture of an object;
FIG. 15 is a diagram illustrating an example of a calculation model created by a calculation-model creation unit;
FIG. 16 is an explanatory diagram illustrating a simulation example of interference with a surrounding structure due to movement of the object;
FIGs. 17A to 17C are explanatory diagrams each illustrating examples of state transition corresponding to the example of the movement of FIG. 16;
FIGs. 18A to 18D are explanatory diagrams each on a X-Y plane corresponding to the example of FIGs. 17A to 17C; and
FIGs. 19A and 19B are explanatory diagrams each illustrating an example of interference state in accordance with the examples of FIGs. 16 to 18D.

### BEST MODE FOR CARRYING OUT THE INVENTION

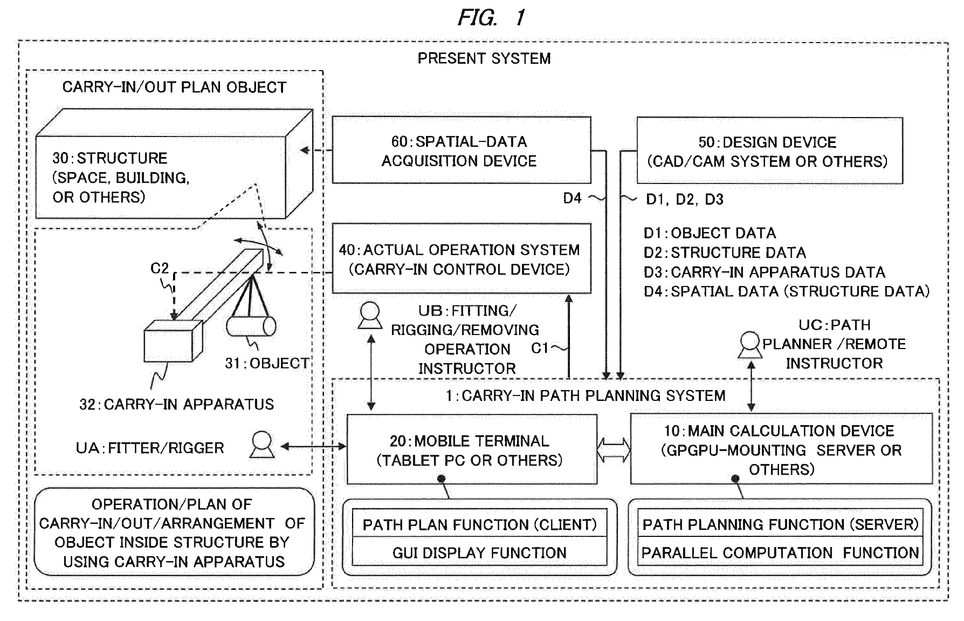

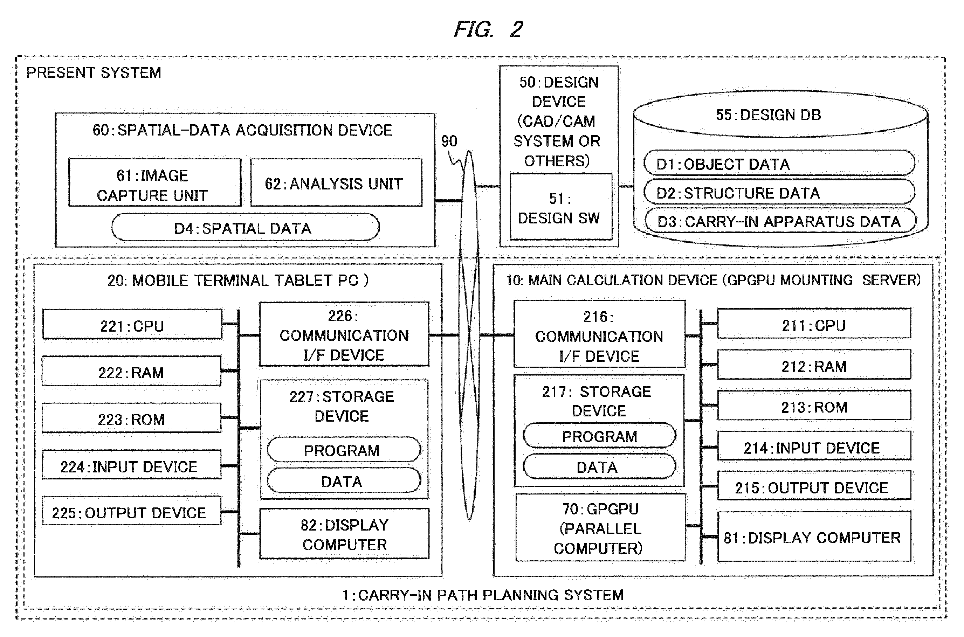

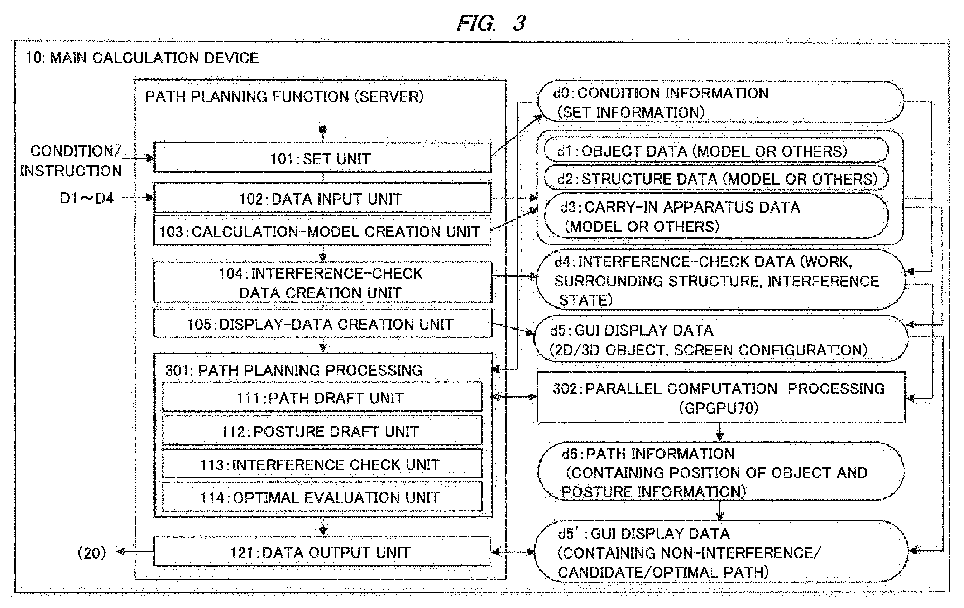

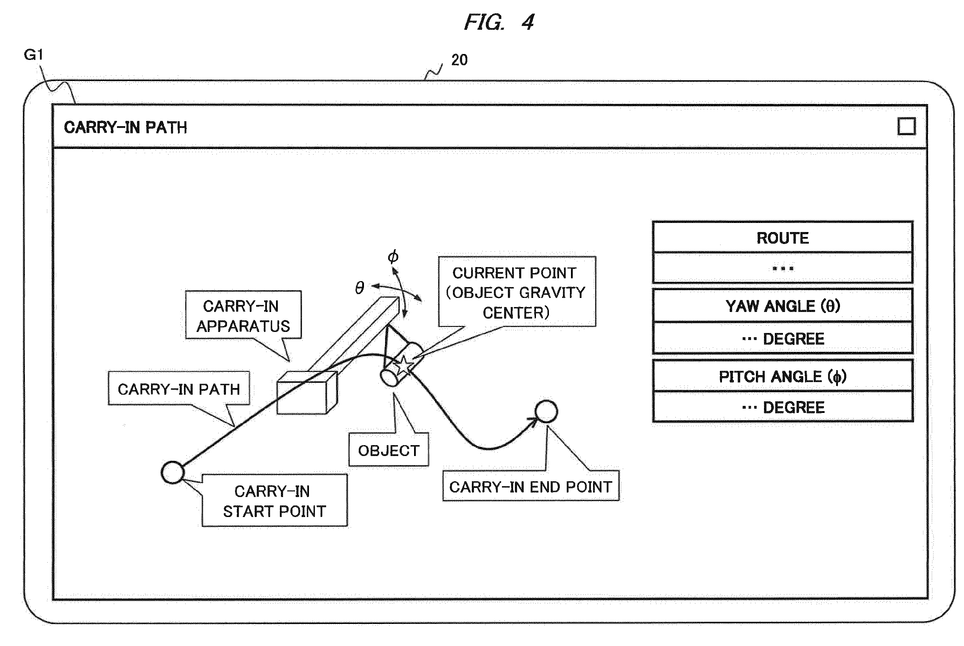

Hereinafter, a carry-in path planning system of an embodiment of the present invention or others will be described in detail with reference to the accompanying drawings. Note that the same components are denoted by the same reference symbols in principle throughout all drawings for describing the embodiment, and the repetitive description thereof will be omitted. The present system has a system configuration as illustrated in FIGs. 1 and 2, performs processing as illustrated in FIGs. 3, 9, and 10, and provides GUI screens as illustrated in FIGs. 4, 12, 13, and others.

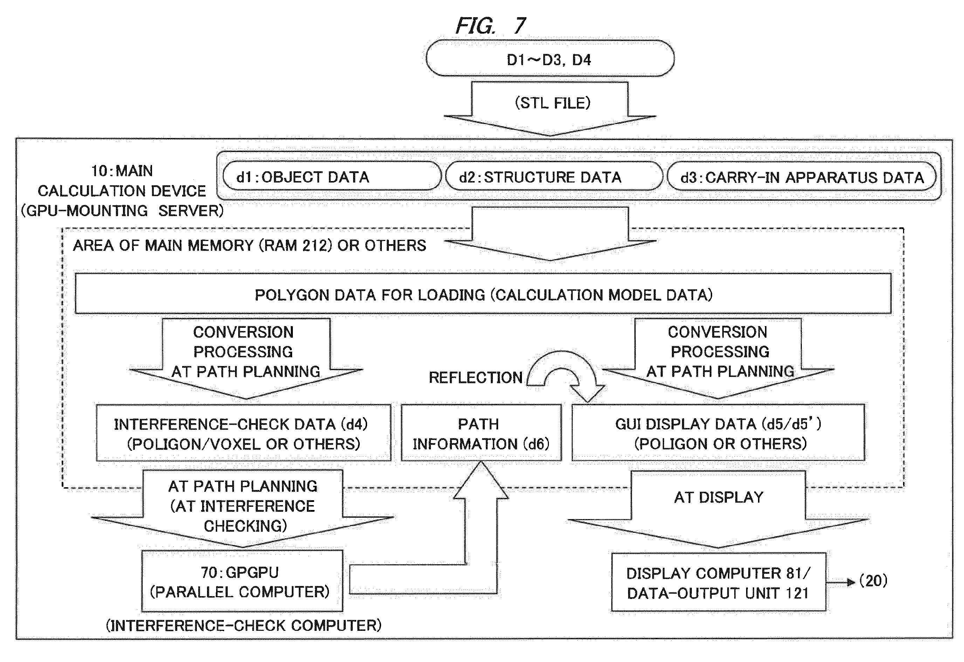

The system of the present embodiment has a configuration in which a technique of a CAD, CAM, or others and a technique of a GPGPU (General-Purpose Computing on Graphics Processing Units) or others are integrated with each other, and has a function of automatic high-speed planning and calculation of an efficient carry-in/out path without interference between the object and a surrounding structure. Therefore, the system has particularly a configuration which performs a parallel computation processing using the GPGPU as illustrated in FIGs. 7, 8, and 10.

### [System Configuration]

FIG. 1 illustrates a configuration example of a system of the present embodiment. The entire present system has: a planning object or a carry-in/out object including a structure 30, an object 31, and a carry-in apparatus 32; a carry-in path planning system 1; an actual operation system (also referred to as carry-in control device) 40; a design device (CAD/CAM system or others) 50; and a spatial-data acquisition device 60. The carry-in path planning system 1 has such a configuration that a main calculation device 10 and a mobile terminal 20 are connected to each other through a communication network. The main calculation device 10 has a path planning function (more particularly, a server function) and a parallel computation function. The mobile terminal 20 has a path planning function (more particularly, a client function) and a GUI display function.

Note that users/persons in the present system are assumed to be a fitter/rigger "UA": who executes fitting/rigging/removing operation, a fitting/rigging/removing operation instructor "UB": who gives an instruction on the fitting/rigging/removing operation, and a path planner/remote instructor "UC" who plans the carry-in/out path or remotely gives an instruction on the plan or the operation. For example, the fitter/rigger UA is in vicinity of the object 31 inside a target space (30). For example, the fitting/rigging/removing operation instructor UB is inside the target space (30) together with the fitter/rigger UA, and gives an instruction to the fitter/rigger UA, or gives an instruction to the fitter/rigger UA remotely from outside the space. The fitting/rigging/removing operation instructor UB operates, for example, the actual operation system 40. For example, the path planner/remote instructor UC operates or sets the main calculation device 10 of the present system or others, or may remotely give an instruction to the fitting/rigging/removing operation instructor UB or others.

The structure 30 is a target space/building or others into/from which the object 31 is carried. For example, the structure 30 is a plant of a construction target or others. Note that a shape of a surrounding structure (30) with respect to the object 31 can be changed by moving a part of the surrounding structure (30) such as an installed subject. As the obj ect 31, various types of a product, a material, an apparatus, or others to be carried in or out are cited. For example, the object 31 is a pipeline or others. The carry-in apparatus 32 is a device for carrying in and out or moving the object 31 inside the structure 30. For example, such an apparatus as a crane, a hoist, or a (lifting) chain for suspending the object 31 is cited. For example, the carry-in apparatus 32 moves the object 31 or change the posture (angle) of the object 31 by operation of rotation of the crane or expansion/contraction of the chain. When a person directly carries the object 31, note that the carry-in apparatus 32 is not provided.

Not only the object 31 but also the carry-in apparatus 32 has a possibility of the interfere with the surrounding structure (30), and therefore, when the carry-in apparatus 32 is used, the carry-in apparatus 32 together with the object 31 are set as an integral object/model ("work" described later) and are calculated in the calculation of the path by the present system.

The actual operation system 40 controls operation of the carry in/out of the object 3 by controlling the operation of the carry-in apparatus 32 inside the structure 30. The detailed configuration of the actual operation system 40 is in accordance with a form of the carry-in apparatus 32 or others, and the actual operation system 40 and the carry-in apparatus 32 may be integrated together. For example, movement of the carry-in apparatus 32 itself in front and back and right and left directions and the operation of the object 31 by the carry-in apparatus 32 are controlled by the actual operation system 40. For example, the movement of the object 31 along a planned path is achieved by controlling the operation of the carry-in apparatus 32 by providing control information (C1) in accordance with the planned path from the carry-in path planning system 1 to the actual operation system 40, and then, providing operation control information (C2) in accordance with the control information (C1) from the actual operation system 40 to the carry-in apparatus 32.

In this embodiment, a main calculation device 10 is a calculation device or a computer such as a server on which the GPGPU (see FIG. 2) or others is mounted, and handles main computation processing, control processing, or others in the present system. While the main calculation device 10 has one server in the configuration illustrated in FIG. 1, the main calculation device 10 may have a configuration of a plurality of connected servers, or may have the similar configuration achieved by enabling access to not the GPGPU but a cloud computing service on a communication network such as private cloud.

A mobile terminal 20 is a device carried by the user (UA, UB, etc.) such as tablet PC which communicates with the main calculation device 10 to use a function of the main calculation device 10 such as a calculation result and data, and displays the GUI information on a screen of the mobile terminal 20.

A design device 50 is, for example, a publicly-known CAD/CAM system or others which creates/acquires 3D-CAD data of the object 31 (object data D1), 3D-CAD data of the structure 30 (structure data D2), 3D-CAD data of the carry-in apparatus 32 (carry-in apparatus data D3), etc, by a designer (who may be, for example, the same person as the UC). The structure data D2 is, for example, two-dimensional or three-dimensional model data of a design drawing of an operational-target building or others. The object data D1 is, for example, two-dimensional or three-dimensional model data of a component for configuring the building or others. The carry-in apparatus data D3 is, for example, a two-dimensional or three-dimensional model data of the carry-in apparatus 32. Also, the carry-in apparatus data D3 may contain not only the model data of the carry-in apparatus 32 but also, for example, data for controlling the operation of the carry-in apparatus 32 or others.

A spatial-data acquisition device 60 is configured of a laser scanner or others, and performs a processing of automatically acquiring spatial data D4 from the structure or space 30. To this processing, for example, a publicly-known technique is applicable. The spatial-data acquisition device 60 may be mounted as, for example, an independent device, or may be mounted on the carry-in apparatus 32 or the mobile terminal 20. The spatial data D4 automatically acquired by the spatial-data acquisition device 60 is loaded into the main calculation device 10 or the mobile terminal 20 of the present system 1. The provision of the spatial-data acquisition device 60 is effective because the spatial data D4 can be acquired from the structure 30 in real time.

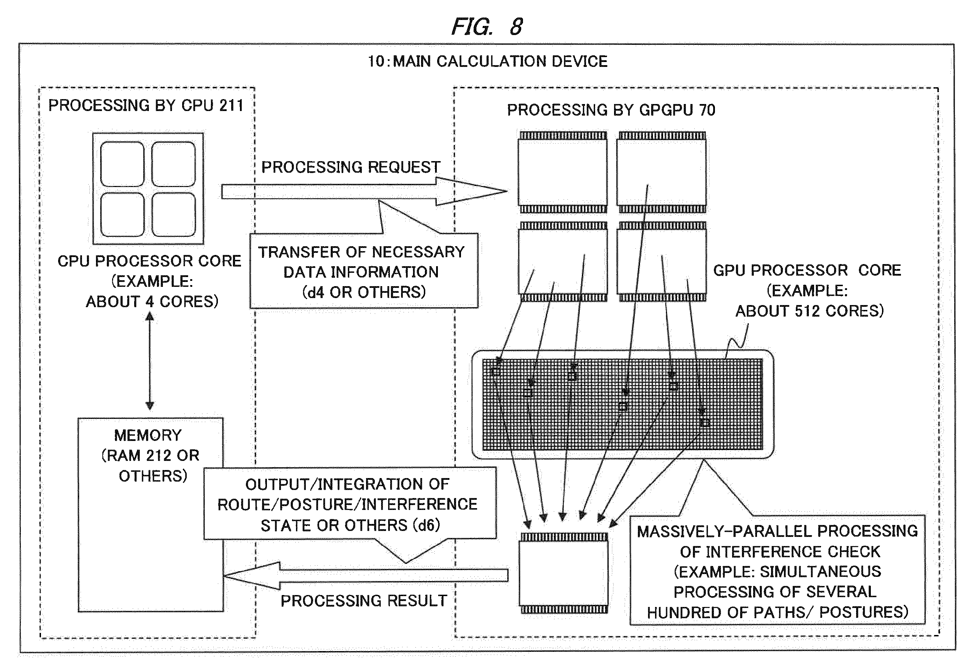

The server function of the path planning function of the main calculation device 10 performs a computation processing of planning a carry-in/out path as utilizing a parallel computation function using the GPGPU (see FIG. 2) in response to input of instruction by the user, a request from a client function of the path planning function of the mobile terminal 20. When the server function of the path planning function receives the access/request from the client function of the path planning function, the server function of the path planning function responds planning process result information, that is, GUI display data containing path information or others. The parallel computation function of the main calculation device 10 performs a parallel computation processing for a lot of paths and postures by using the GPGPU (FIG. 2) based on an instruction from a CPU (see FIG. 8 described later or others).

The GUI display function of the mobile terminal 20 displays the GUI screen for the user, receives the input of the instruction by the user or others, accesses or makes a request to the server function of the path planning function of the main calculation device 10 by using the client function of the path planning function, receives the response information, and displays the GUI information on the screen of the mobile terminal 20 by using the GUI display function.

FIG. 2 illustrates a configuration example of a hardware of this system or others. A numerical symbol 90 denotes a communication network such as a wireless network and the Internet. A design device 50 has design SW (software) 51, and processes each piece of data (D1 to D3) stored in a design DB (database) 55. A design function is achieved by a programming processing of the design SW 51. Each piece of data (D1 to D3) has a format compliant with the design SW 51 such as STL (Standard Triangulated Language) file format. The main calculation device 10 or the mobile terminal 20 of the present system acquires each piece of data (D1 to D3) of the design device 50.

Basically, the static object data D1, structure data D2, and carry-in apparatus data D3 containing a 3D shape model previously designed by the CAD, that is, the design SW 51, are used as the input data for the planning calculation. In addition, the spatial data D4 is used when the spatial data D4 can be acquired by the spatial-data acquisition device 60. Only one of the data D2 and D4 may be used.

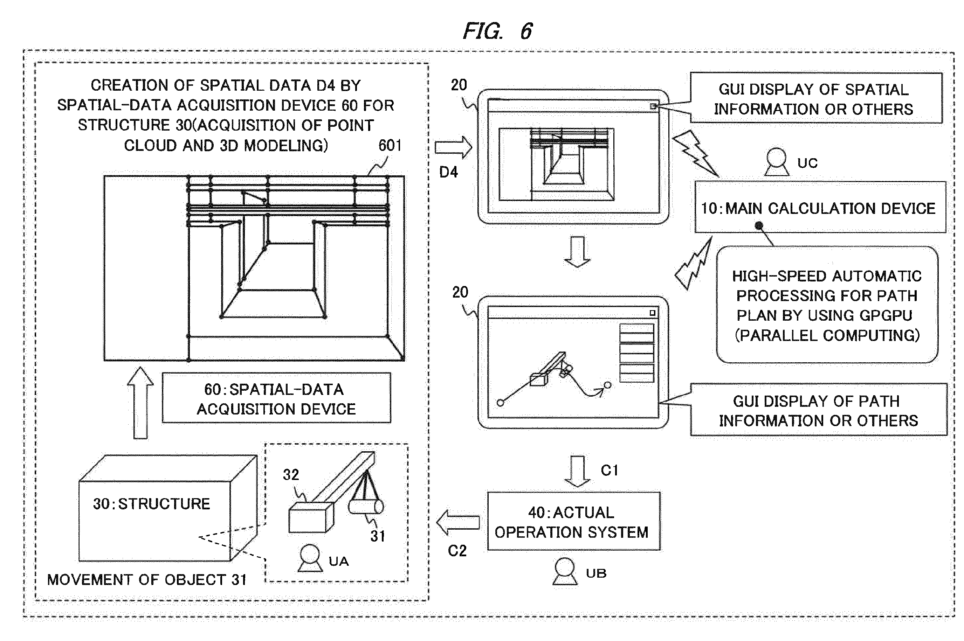

The spatial-data acquisition device 60 has an image-capture unit 61, an analyzing unit 62, and others. For example, the spatial-data acquisition device 60 extracts data information (referred to as point cloud or others) such as a characteristic point and line by using an image analysis processing such as edge extraction performed by an analysis unit 62 based on data of an image of a space inside the structure 30 such as a front side of the object 31 captured by the image-capture unit 61 such as a laser scanner, and configures a three-dimensional model of the surrounding structure such as a floor, a wall, a ceiling, and others, and obtains the spatial data D4 (see FIG. 6 described later). Note that the three-dimensional model may be configured by the main calculation device 10 or others.

The server on which the GPGPU is mounted, which is the main calculation device 10, is configured of: a CPU 211; a RAM 212 which is a main memory; a ROM 213; an input device 214; an output device 215; a communication I/F d3evice 216; a memory device 217; a GPGPU 70 which is a parallel computer; a display computer 81; a bus; and others. The processing is executed by loading the program or data of this embodiment from the ROM 213, the memory device 217, or others, to the RAM 212 by the CPU 211, so that the server function of the path planning function or others is achieved. The input device 214 and the output device 215 include a keyboard, a display, an input/output interface control processor for the keyboard and the display, or others. The communication I/F device 216 performs an interface processing to the communication network 90. The memory device 217 is a secondary memory device such as a disc and a card. The GPGPU 70 is configured of a GPGPU board provided by a publicly-known technique or others. The display processor 81 is configured of a graphic board or others. Note that the display processor 81 may be eliminated so as to be an integral device with the GPGPU 70. In this case, outputs from the GPGPU 70 are used separately for the screen display and for the path planning or reference data.

The mobile terminal 20 is configured of: a CPU 221; a RAM 222; a ROM 223; an input device 224; an output device 225; a communication I/F device 226; a memory device 227; a display processor 82; a bus; and others. The processing is executed by loading the program or data of this embodiment from the ROM 223, the memory device 227, or others to the RAM 222 by the CPU 221, so that the client function of the path planning function or other is achieved. The input device 224 and the output device 225 include a touch panel, an input/output interface control processor for the touch panel, or others. The communication I/F device 226 performs an interface processing to the communication network 90. The memory device 227 is a secondary memory device such as a disc and a card. The display processor 82 is configured of a graphic board or others.

### [Main Calculation Device]

FIG. 3 illustrates a functional block configuration of the main calculation device 10, a schematic process flow of the same, processing data information of the same, and others. A detailed process flow of the same will be described later. As a processing unit, a program module, etc., configuring the server function of the path planning function, the main calculation device 10 includes : a setting unit 101; a data input unit 102; a calculation-model creation unit 103; an interference-check data creation unit 104 (which is also referred to as path planning data creation unit); a display-data creation unit 105; a path draft unit 111; a posture draft unit 112; an interference check unit 113; an optimal evaluation unit 114; a data output unit 121; and others.

The setting unit 101 performs processing of providing a GUI screen for a setting operation to the user, receives input of an instruction related to the path planning or the usage of the function of the present system, receives setting of calculation method, a threshold, and others, and receives input/setting of various pieces of information or others, and stores a received content as condition information or setting information "d0". Also, as a condition which is inputted at the beginning by the user for the path planning, the setting unit 101 may receive information such as designation of the object 31, the carry-in apparatus 32, and the structure 30, a starting point and an end point, a posture, and a pass point during the carrying, and may store a received content as the condition information d0. Such information can be received on the screen at not only the beginning but also any time. Further, the already-set condition information d0 may be designated or a set value may be updated by the user.

The data input unit 102 acquires various pieces of data (D1 to D4) required for the path planning from outside, inputs the data, and stores the acquired data in the memory device 217 of the main calculation device 10 or others as the corresponding data d1 to d3 or others.

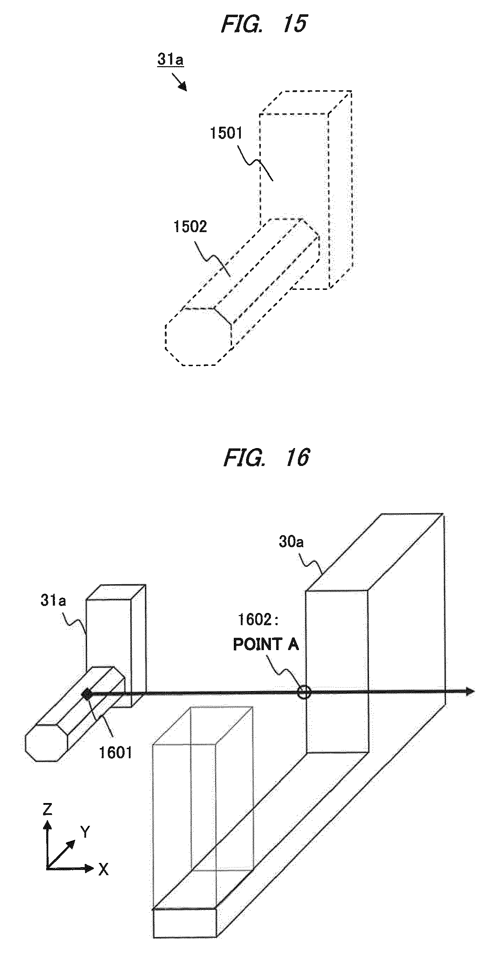

The calculation-model creation unit 103 creates model data for calculating each model of the structure 30, the object 31, the carry-in apparatus 32, and others, for calculating the path planning based on the data D1 to D4 or others such as 3D CAD data, and stores the created data as the data d1 to d3 or others. When the data D1 to D4 or others acquired from the outside can be used for the calculation as they are, note that this processing can be eliminated. As the calculation model data, a 3D model or object is created by using a combination of more simply-shaped elements such as a rectangular parallelepiped element, a column element, and others, or a wire frame, by providing a spatial margin around an actual complicated shape object in order to reduce an amount of the calculation (see FIG. 15 described later). The user can set how to provide the margin such as a size, an element to be used, and others, by using, for example, the setting unit 101.

When the path is planned or the calculation is executed, the interference-check data creation unit 104 creates data "d4" for the interference check, that is, for the path planning processing including the interference check through a conversion processing based on the above-described calculation model data (d1 to d3). This data d4 is object data having a predetermined format such as polygon data/voxel data related to the structure 30, the object 31, the carry-in apparatus 32, or others, in accordance with the parallel computation method for the path planning. The data d4 is passed to the GPGPU 70 which is the parallel processing unit when, for example, the path is planned or the interference is checked.

Hereinafter, an object such as the object 31, the carry-in apparatus 32, or others, during the calculation for the path planning is also referred to as "work". Also, it is assumed that the object 31 (work) during the calculation includes the carry-in apparatus 32.

When the path is planned or the GUI is displayed, the display-data creation unit 105 creates GUI-screen display data d5 through a conversion processing based on the above-described calculation model data (d1 to d3). This data d5 is 2D or 3D data for visualizing the overall including the object 31, the structure 30, and others, Web screen configuration data, and others. This data d5 is passed to the data output unit 121, the display processor 81, or the mobile terminal 20 when the GUI display is requested.

In order to enable high speed response in the parallel processing of the interference check or the path planning with the GUI display processing, the GUI display data d5 and the interference check data d4 are provided as the different data from each other so as to be parallely processed (see FIG. 7 or others described later).

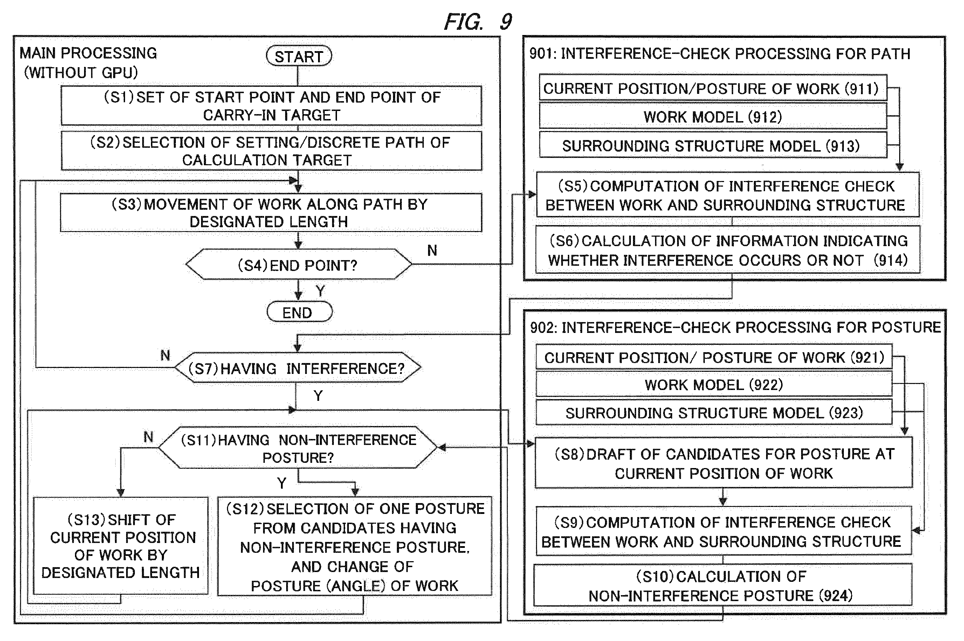

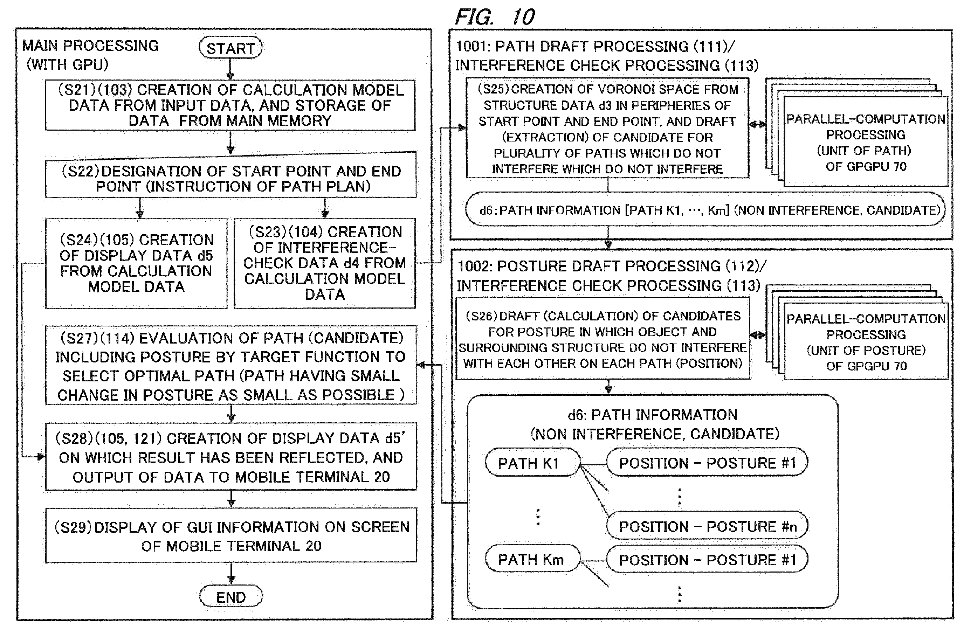

The main path planning processing (301) is configured of each process such as the path draft unit 111, the posture draft unit 112, the interference check unit 113, the optimal evaluating unit 114, and others. Any processing can be executed at high speed by the parallel computation processing using the GPGPU 70. Each processing unit performs the calculation by using the condition information d0, the interference data d4, or others, and outputs a calculation result as path information d6. These processing units are properly combined with or separated from each other in accordance with a detailed processing flow described later (FIGs. 9 and 10).

In accordance with, for example, the designation of the start point and the end point of the carry-in path or the condition information d0, the path draft unit 111 drafts a plurality of path candidates passing between both of them (however, without taking the posture of the object 31 into consideration). For example, the path candidates are ideally such a short distance as a straight line connecting the start point to the end point. However, when the path is in contact or interferes with the surrounding structure (30) such as a wall, the path is created so as to appropriately bypass the surrounding structure. The drafted path candidates are stored as the path information d6. The contact/interference between the object 31 and the surrounding structure 30 is determined by the interference check unit 113. For the high speed, note that the path may be drafted by simplifying the shape/model of the object 31 as a point or a circle shape.

In accordance with, for example, the path candidates drafted by the path draft unit 111, the posture draft unit 112 drafts a plurality of posture candidates for a posture of the object 31 moving along the path or for an angle defining the posture. The contact/interference between the surrounding structure 30 and the object 30 which takes a posture in accordance with a position or a point on the path is determined by the interference check unit 113. For example, if the surrounding structure (30) and the posture of the object 31 do not interfere with each other while the posture/angle of the object 31 is changed continuously at a certain position, the posture is determined to be the posture candidate, but, if they interfere with each other, the posture is determined not to be the posture candidate. Also, for example, if they interference with each other, the posture/angle is returned to an original posture/angle, and then, another candidate is searched. The posture draft unit 112 drafts a non-interfered posture as the candidate, and stores the posture candidate together with the positional information on the path as posture information contained in the path information d6.

For the above-described path candidate/posture candidate, the interference check unit 113 checks/determines an interference state between the object 31 (work) having the certain posture on the path and the surrounding structure (30) or checks/determines whether the interference occurs or not, and calculates information indicating the state or whether the interference occurs or not. This information is, for example, binary information (referred to as interference flag) indicating whether the interference occurs or not.

The non-interference paths and postures between the object 31 (work) and the surrounding structure (30) are drafted as the candidates by the above-described processing (111, 112, 113), and are stored as the path information d6, that is, the path information containing the positional/posture information of the object 31. For example, the path information d6 contains information such as an ID of the object 31, an ID of the path, the start point, the end point, each position or each coordinate of the pass point during the movement, a position at which the posture/angle is changed, and the amount of the angle change.

Based on a predetermined evaluation function or setting information, the optimal evaluation unit 114 evaluates the non-interference path candidates including the posture indicated by the path information d6 obtained by the above-described processing, so that the optimal evaluation unit 114 selects an optimal path including the posture, and stores the optimal path as the path information d6. Such an evaluation function is as having a higher evaluation value as the smaller change in the posture on the path. An advantage in actual operation is larger as the change in the posture on the path is smaller, and therefore, the evaluation value is higher. Obviously, the change in the posture/angle is calculated so as to be continuous and so that the operation is executable.

For example, the object 31 is moved on the path each predetermined length while having the non-interference posture from a certain position on the path such as the end point at which the posture of the object 31 is a specific posture. If the non-interference state continues, the evaluation value is increased by the continuation. If the posture is changed due to the avoidance of the interference, the evaluation value is decreased by the avoidance.

The data output unit 121 creates a GUI display data d5' for displaying the optimal path and the 2D/3D information of the structure 30 on the screen by using the path information d6 containing the path candidates, the optimal path, and others obtained by the above-described processing and using the GUI display data d5 which has been previously created. And, the created GUI display data d5' is outputted (transmitted) from the main calculation device 10 to the mobile terminal 20. The mobile terminal 20 receives, acquires, and stores the GUI display data d5', and displays the GUI information on the screen of the mobile terminal 20 through the processing of the GUI display function by using the display processor 82 and the output device 225. In this manner, the user UA or others can perform the operation or others while checking the optimal path or others on the screen.

The path information d6 has, for example, output or data information as described below. It has information of {an X coordinate, a Y coordinate, a Z coordinate}, {an X-axis around rotation, a Y-axis around rotation, a Z-axis around rotation}, and the interference flag at each point of the path which has been made to be discrete by a certain interval. The interference flag is set to 1 if the object and the surrounding structure interfere with each other at this point or coordinate, and is set to 0 if they do not interfere with each other thereat. Alternatively, if they interfere with each other, the interference flag may show not 1 but a member number of the interfering surrounding structure or others.

### [GUI Screen Example (1)]

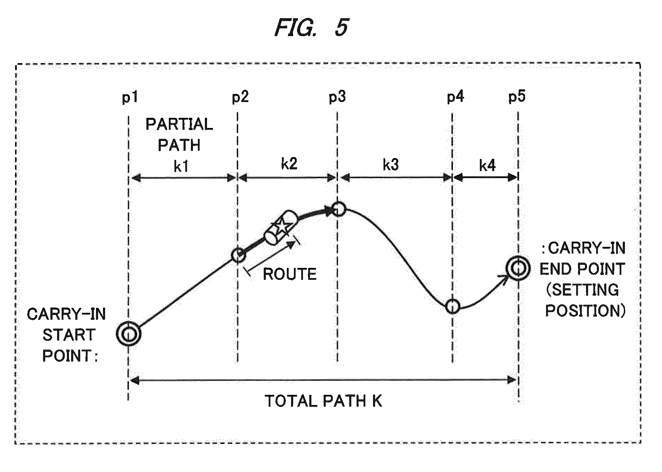

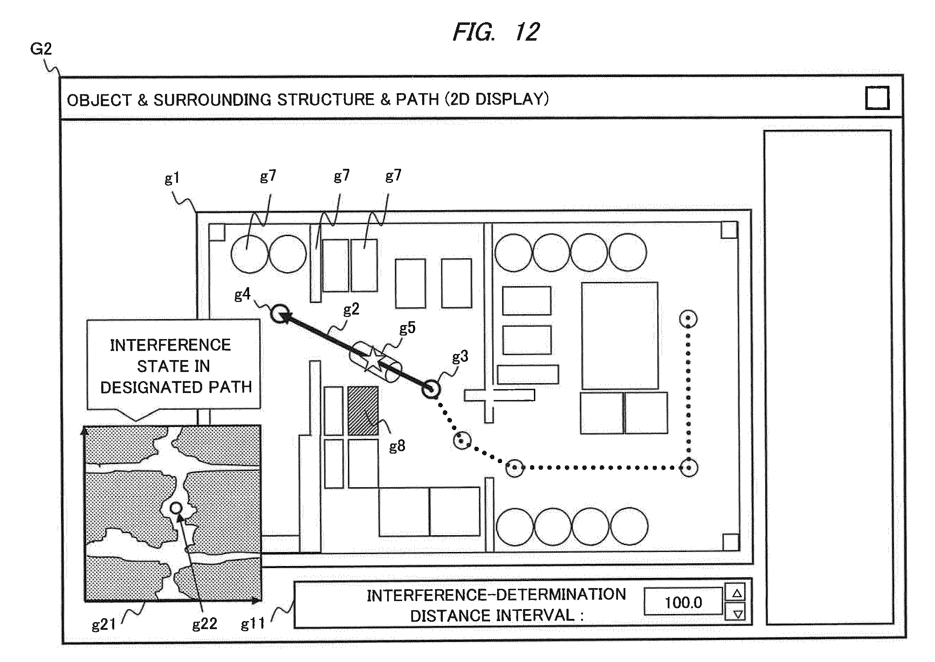

FIG. 4 illustrates an example of the GUI display screen (G1) on the mobile terminal 20. This is an example in which the carry-in path information is displayed. On this screen (G1), a path acquired by a result of the path planning processing, that is, the optimal path is displayed two-dimensionally (2D) or tree-dimensionally (3D). Note that a switching operation between 2D and 3D or others is possible. Although the carry-in path illustrated in FIG. 4 is a curved path, the path is appropriately displayed as a polygonal curved path or others (see FIG. 12 descried later). Also, a space for the structure 30 may be displayed in the 2D or 3D manner on a background (see FIG. 12 descried later). On the carry-in path, the start point or the carry-in start point, the end point or the carry-in start point, and a current point at which a gravity center of the object 31 in the middle of the path is positioned are displayed. Also, the subject 31 such as a 2D/3D object, mark, or others created by simulating a pipeline or the carry-in apparatus 32 is displayed. The manipulate angles (θ, φ) of the carry-in apparatus 32 are illustrated by arrows. Also, the object 31 takes the posture/angle depending on the position of the object 31 on the path or a route thereof, and therefore, the information for them such as various types of information including the yaw angle (θ) and the pitch angle (φ) is displayed as illustrated on, for example, a right side in the drawing. The contents of the position, the path, and others and the GUI display data are updated and displayed on the screen in accordance with the movement/carry-in or out of the object 31 on a virtual or actual operation. As the path to be displayed, the entire path or the partial path can be selected (FIG. 5).

The carry-in start point and the carry-in end point on the carry-in path are points/positions designated by the user. The points/positions can be appropriately changed. The posture of the object 31 at the carry-in start point is an arbitral/free posture in accordance with the user's designation. The posture of the object 31 at the carry-in end point is an arbitral posture in accordance with the user's designation, and is a fixed posture particularly when the object 31 is installed/arranged. The same thing goes for the case of the carry-out path.

### [Partial Path]

FIG. 5 illustrates the entire path, the partial path, and others. In the present system, the partial path of the entire path is set, and the planning calculation processing can be performed for each partial path. The partial paths can be set by partitioning the entire path by the user's operation.

For example, the entire path "K" has a path between the carry-in start point "p1" and the carry-in end point (also referred to as settlement position) "p5". Points "p2" to "p4" which are the pass points in the middle between p1 and p5 are appropriately set so as to be partial paths "k1" to "k4", respectively. FIG. 5 illustrates, for example, a state in which the object 31 has been moved to a middle point of the partial path k2 (between points p2 and p3). A star mark represents the current point. The calculation can be made by setting the partial path k2 (between points p2 and p3) to be a temporal entire path (between the start point and the end point). The entire path K can be planned by total of the plans for the respective partial paths.

Also, as an example of the calculation method, particularly, the path and posture can be calculated/searched in a direction from the carry-in end point p5 to the carry-in start point p1 while fixedly designating the carry-in end point p5 and the posture at that point.

The same goes for the case of the carry-out operation. The calculation/planning can be similarly performed while, for example, designating the point p1 as the carrying-out end point and the point p5 as the carrying-out start point (at which the posture is fixed).

Also, depending on applications or situations, the start point and the end point are not clearly determined in some cases. In such a case, the calculation is made while the partial path is occasionally set. For example, in a case of a rubble (debris) removal operation, the spatial data D4 in front of the start point p1 is acquired, the corresponding structure data d2 is acquired, and a spatial condition is displayed on the screen of the mobile terminal 20. A position which is slightly ahead of a point where the object 31 is movable in the displayed space is set as a temporal end point such as p2 by the user, and the partial path k1 (between the points p1 and p2) is calculated. As a result, the object 31 is moved from the point p1 to the point p2. Next, while taking the point p2 as a temporal start point and designating p3 as a next temporal point, the calculation for the partial path k2 and the movement are similarly performed. By repeating such a processing, the object 31 can be gradationally moved in the structure 30. By appropriately removing the rubbles or others, the spaces where the object 31 is movable are secured, and can be designated as the start point and the end point. Even during the construction of the plant or others, the surrounding structure such as a building material is removable in some cases, and therefore, the spaces where the object 31 is movable can be secured by appropriately moving the surrounding structure, and can be designated as the start point and the end point. That is, the path can be changed flexibly, and the change can be supported in accordance with the condition and the user's decision.

### [Spatial Data Acquisition]

FIG. 6 illustrates a schematic flow of an operation and a processing in a case/example in which the planning is performed by automatically acquiring the spatial data D4 by using the spatial-data acquisition device 60 so as to correspond to the system of FIG. 1.

Inside the target structure 30, the spatial data D4 inside the structure 30 is acquired by the user UA or others by using the spatial-data acquisition device 60, and is transmitted to the mobile terminal 20 or the main calculation device 10. The spatial data D4 is acquired through the acquisition of the point cloud and the three-dimensional modeling. A numerical symbol 601 indicates an example of the acquired spatial data D4, and is a 3D wire frame model formed by dots and lines.

For example, the mobile terminal 20 displays the space on the GUI screen in accordance with the acquired spatial data D4. The mobile terminal 20 transmits the spatial data D4 to the main calculation device 10 so as to instruct it to plan a path.

The main calculation device 10 performs a calculation processing for planning a path applicable to the space as indicated by the 3D model 601, in other words, a special-high-speed automatic path planning processing, through the parallel computation of the GPGPU 70 by using the structure data d2 in accordance with the spatial data D4, and transmits the GUI display information (d5') created based on the path information (d6) acquired as a result of the path planning processing to the mobile terminal 20.

The mobile terminal 20 display the GUI screen including the path information or others by using the GUI display information (d5') acquired from the main calculation device 10. For example, the users UA, UB, and others can check the path or others while observing the screen of the mobile terminal 20.

Also, the movement of the carry-in apparatus 32 is controlled by transmitting the control information (C1) for controlling the movement of the carry-in apparatus 32 in accordance with the planned path from the main calculation device 10 or the mobile terminal 20 to the actual operation system 40, and transmitting the movement control information (C2) from the actual operation system 40 to the carry-in apparatus 32. In this manner, the object 31 is moved inside the structure 30.

### [Parallel Processing of Planning with Display]

FIG. 7 illustrates a configuration example in which the speed of the path planning processing including the interference check processing and the GUI screen display processing is increased by the parallel processing in the present system. In the path planning in the main calculation device 10, this is a method of achieving both of the high speed of the planning processing including the interference check or others and the high speed of the GUI screen display processing using the display processors 81 and 82 by utilizing the parallel computation processing using the GPGPU 70. The processing is performed in parallel or simultaneous processing using the GPGPU 70 (in other words, the interference-check processor) and the display processor 81 (or the display processing function of the GPGPU 70) which are the two types of processors provided in the main calculation device 10.

The 3D CAD data (D1) of the object 31, the 3D CAD data (D2) of the structure 30, and others are inputted into the main calculation device 10 in a STL file format or others (d1 to d3) (by the data input unit 102 or others). The loading polygon data or others which is data for each calculation model is created based on the input data (d1 to d3), and is stored in a region of the main memory (RAM 212, etc.) inside the main calculation device 10 (by the calculation model creation unit 103 or others).

In the path planning such as the user's instruction input, the data in the main memory is converted into the interference check data d4 such as the polygon/voxel data of the work or the surrounding structure and into the GUI display data d5 such as the polygon data for entirely visualizing the structure 30 (by the interference-check data creation unit 104 and the display-data creation unit 105).

And, in the GUI display, the GUI display data d5 (d5') is outputted to the display processor 81, the mobile terminal 20, or others (by the data output unit 121 or others). Further, in the path planning processing including the interference check, the interference check data d4 is outputted to the GPGPU 70 which is the parallel processor (by the path planning unit 111 to the optimal evaluation unit 114). The path information d6 or others which is the result of the processing by the GPGPU 70 is returned to the region of the main memory, and is reflected to the GUI display data d5'.

### [Parallel Computation Processing]

FIG. 8 illustrates a configuration example in which the parallel computation processing using the GPGPU 70 is performed by the main calculation device 10. For example, parallel computation processing of the interference check processing for the plurality of path candidates and the plurality of posture candidates in the path planning processing (301) is performed by using a lot of processor cores provided in the GPGPU 70. The CPU 211 has, for example, four processor cores. The GPGPU 70 has, for example, 512 GPU processor cores.

As the processing at the CPU 211, the CPU 211 requests/instructs the GPGPU 70 to perform the parallel computation processing in the path planning. At this time, the interference check data d4 or others which is the necessary data information is transferred to the GPGPU 70. The GPGPU 70 divides the processing for assignment by using the plurality of cores in accordance with the request for the processing from the CPU 211. For example, the GPGPU 70 assigns the interference check processing for one or more path candidates or posture candidates to one core, and the processing performed by the plurality of cores is executed parallely. For example, the interference check processing for several hundred paths/postures is executed. And, the results of the parallel computation processing such as the path information d6 containing the information of the paths, of the postures, and of indicating whether the interference occurs or not are outputted, and is integrated with the RAM 212 which is the main memory of the CPU 211 or others. The CPU 211 processes the acquired information on the main memory.

In the present embodiment, the GPGPU 70 is provided in the main calculation device 10, so that the high-speed parallel computation processing as illustrated in FIGs. 7 and 8 is allowed. A processing flow corresponding to this configuration is illustrated in FIG. 10.

If the GPGPU 70 is not provided in the main calculation device 10 or is not used, a sequential computation processing may be performed by using a single CPU. A processing flow corresponding to this configuration is illustrated in FIG. 9. While this case takes longer processing time than that of the parallel computation processing, this case is reasonably useful in an application of no requirement of real-time response performance.

### [Processing Flow (1)]

FIG. 9 illustrates an example of an algorithm and an example of a processing flow in a method for the calculation processing (301) of the path planning using the main calculation device 10 in the case of the single CPU. A symbol "S1" and others denote processing steps. The calculation model data (d1 to d3), the interference check data (d4), the path information d6, and others described above are appropriately used in the following processing. A main body for each step is the main calculation device 10 or the path planning function.
(S1) As described above, conditions required for the calculation such as the start point and the end point are designated/set first (as the condition information d0).
(S2) The carry-in path which is the calculation target is set in accordance with the start point and the end point in step S1, and is divided for a discrete unit, that is, a calculation unit. At this time, note that the details of the carry-in path have not been determined yet. Also, for example, one path candidate is drafted by the path planning unit 111, and is selected as a processing target path. For example, the calculation is started from the start point side. Note that the calculation may be started from the opposite side, that is, the end point side.
(S3) Along the above-described path, the work, that is, the object 31 including the carry-in apparatus 32 for the calculation is moved by a specific length, that is, parallelly. The positional information of the work is appropriately updated. This specific length can be set, for example, by the user in the setting unit 101.
(S4) If a position after the above-described movement is the end point (Y), the processing flow ends, and the path is determined to be the path candidate shown to the user. If the position is not the end point (N), the processing flow proceeds to a processing 901 (S5).
(S5) In the processing 901, the interference check processing for the path candidates is performed by mainly using the path draft unit 111 and the interference check unit 113 so as to derive the non-interference path. In the processing S5, the computation processing for determining the interference state and occurrence/non-occurrence of between the position/posture of the work and the surrounding structure or determining whether the interference occurs or not is performed by the interference check unit 113 by using the interference check data d4 which is the data information containing the current position/posture (911) of the work, the work model (912), and the surrounding structure model (913) of the work based on the data d1 to d3 and d6.
(S6) As a result of the step S5, interference state information 914 which is the information indicating the interference state or indicating whether the interference occurs or not is calculated and stored (a part of the path information d6). Note that the processing at each of steps S5 and S6 may be combined with each other. Then, the processing proceeds to step S7.
(S7) At step S7, if it is determined that the interference in the calculation-target path, posture, and work occurs (Y) from the interference state information 914, the processing proceeds to the step 902 (S8). If it is determined that the interference does not occur (N), the processing returns to step S3 to similarly repeat the processing.
(S8) In the processing 902, the interference for the path candidates is checked by mainly using the posture draft unit 112 and the interference check unit 113s so as to derive the non-interference posture. At step S8, one or more posture candidates at the current position of the work on the path is drafted by the posture draft unit 112 by using the interference check data d4 which is the data information containing the current position/posture (921) of the work based on the data d1 to d3 and d6, and is selected as the processing target.
(S9) And, at step S9, the computation processing for determining the interference state between the work taking the position and posture and the surrounding structure or determining whether the interference occurs or not is performed by the interference check unit 113 by using the interference check data d4 which is the data information containing the position/posture (921) of the work as a result of step 8, a work model (922) (same as 912), and a surrounding structure model (923) of the work (same as 913).
(S10) As a result of step S9, the posture/space providing the non-interference state is calculated and is stored as non-interference posture information (924) (a part of the path information d6). Note that the processing at each of steps S9 and S10 may be combined with each other. Then, the processing proceeds to step S11.
(S11) At step S11, if the non-interference posture is found (Y) in the calculation-target path, posture, and work from the non-interference posture information (924) of S10, the processing proceeds to S12. If the non-interference posture is not found (N), the processing returns to step S13.
(S12) At step S12, one of the non-interference posture candidates is selected by the posture draft unit 112, and the current posture/angle of the work is changed so that another posture candidate is calculated. For example, the posture angles (θ, Φ) to be changed are determined, and the work is rotated by the predetermined angles. The posture information after the change is stored (a part of the path information d6). Then, the processing returns to step S3 to repeat the processing.
(S13) At step S13, the current position of the work on the path is shifted, that is, is parallelly moved by a specific length as similar to step S3 since the non-interference posture is not found, and the processing returns to the processing 902 (S8) to repeat the processing.

As described above, the path providing the non-interference posture with respect to the surrounding structure can be obtained while trying the parallel movement of the position of the object 31 which is the work and trying the change of the posture/angle.

### [Processing Flow (2)]

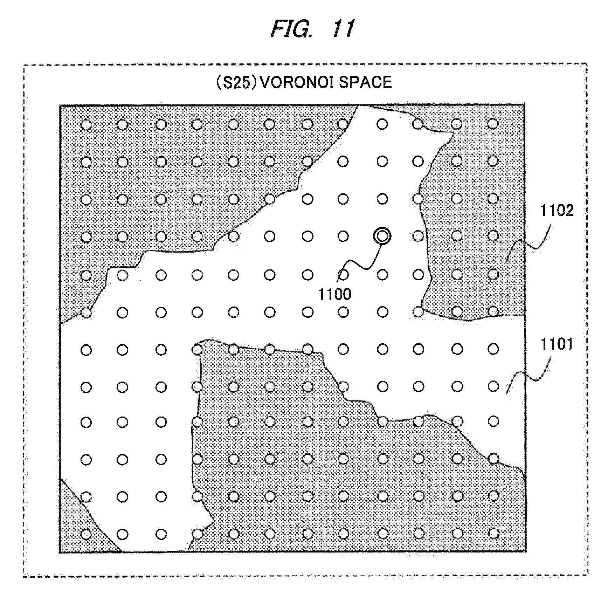

FIG. 10 illustrates an example of an algorithm and an example of a processing flow in a method for the path-planning calculation processing (301) using the parallel computation processing by the GPGPU 70 in the main calculation device 10 (corresponding to the configuration examples of FIGs. 7 and 8). This processing flow has steps 1001 and 1002 as the processing steps for the parallel computation using the GPGPU 70. In the processing of 1001, the processing per the path is assigned to each of the plurality of cores (see FIG. 8) of the GPGPU 70 to calculate a basic path without consideration of the plurality of paths and postures. In the processing 1002, the processing per the path/posture is assigned to each of the plurality of cores (see FIG. 8) of the GPGPU 70 to calculate a plurality of postures of the basic path/candidate acquired in the processing 1001. In the processing 1002, the non-interference path is calculated by the calculation in consideration of the shape and the posture of the object.
(S21) In the main calculation device 10, the calculation model data is created by the calculation-model data creation unit 103 based on various pieces of data (d1 to d3) based on the input data (D1 to D4), and stores the data in the RAM 212 which is the main memory or others as the loading polygon data (see FIG. 7).
(S22) As described above, the conditions required for the calculation such as the start point and the end point are set.
(S23) In the path planning such as the user' s instruction input, the interference check data d4 is created by the interference-check data creation unit 104 through the conversion processing based on the calculation model data of the main memory, and is stored in the main memory (see FIG. 7).
(S24) Also, the GUI display data d5 is previously created by the display-data creation unit 105 through the conversion processing based on the calculation model data in parallel with the step S23, and is stored in the main memory (see FIG. 7).
(S25) In the processing 1001, by the path draft unit 111, a Voronoi space (see FIG. 11) is created based on the data d3 of the structure around the designated start point and end point by using the interference check data d4, and the plurality of the path candidates having the non-interference state are drafted/extracted as checking/determining the interference state between the object 31 and the surrounding structure (30) by the interference check unit 113. In this processing, a processing for each path is performed by the above-described parallel computation processing using the GPGPU 70 (see FIG. 8). In this manner, the path information d6 containing the plurality of path candidates is acquired.
   The processing content for each one of the GPU cores is, for example, a processing of creating a Voronoi diagram in a cross-sectional surface taken along a horizontal plane at a certain height in a vertical axis direction.
(S26) In the processing 1002, by using the path information d6 containing the plurality of path candidates acquired at step S25, the non-interference posture between the object 31 and the surrounding structure (30) at a position in the middle of each path candidate is drafted/calculated by the posture draft unit 112 and the interference check unit 113. This processing is performed for each posture at a position/point on the path by the above-described parallel computation processing by using the GPGPU 70 (see FIG. 8). In this manner, the path information d6 containing the plurality of posture candidates is acquired.
   In the interference check on each path at step S26, a plurality of postures at a certain point/position on the path have been previously created, and the interference between the object and the surrounding structure is determined for each posture by each GPU core. And, a combination of the non-interference postures at a certain point on the path is displayed on a posture section.
   The processing content for each GPU core is, for example, a processing of checking the interference between the object and the surrounding structure for a certain posture of the object at a certain point on the path.
(S27) An optimal path such as a path through which the posture change is as small as possible is determined by performing an evaluation processing by using an objective function by the optimal evaluation unit 114 for the path/posture information in the path information d6 of the above-described processing result. In this processing, the parallel computation processing using the GPGPU 70 may be similarly used.
(S28) The GUI display data d5' to which the processing result containing the path information d6 has been reflected is created by using the display-data creation unit 105, and the GUI display data d5' is outputted/transmitted to the mobile terminal 20 by using the data output unit 121.
(S29) In the mobile terminal 20, the GUI information is displayed on the screen of the mobile terminal 20 by using the GUI display data d5', the display processor 82, the output device 225, and others.

For example, when the data d5' is outputted on the screen of the main calculation device 10, note that a processing of displaying the GUI information on the screen by using the display processor 81, the GPGPU 70, the output device 215, or others. Also, in the output processing step such as the step S29, when the plurality of paths/candidates are acquired by a calculation result of the present system, the information of them is displayed as the candidates, and one of them is appropriately selected and used by the user's operation. For example, when the user determines that a certain path is inappropriate, the user can select another path.

### [Path Draft (Voronoi Space)]

FIG. 11 illustrates an example of a Voronoi space, that is, a potential field in accordance with the distance between the object 31 and the surrounding structure (30) created by the path draft processing of step S25. A numerical symbol 1100 indicates an example of a calculation unit or coordinate corresponding to a current position of the object 31 which is the work. A numerical symbol 1101 indicates a non-interference region, and the interference does not occur at a point included in this region. A numerical symbol 1102 indicates an interference region, and the interference occurs at a point included in this region. Note that this is a case of the interference-state determination using binary values indicating whether the interference occurs or not.

At step S25, the Voronoi space is created by the parallel computation processing by using the GPGPU 70. In this creation method, 2.5 dimensional calculation is performed for high-speed operation. That is, several slices of planes cut on a horizontal surface are prepared in a vertical direction, and the Voronoi diagram is calculated on each of the planes by using each GPU core. The Voronoi diagrams on a plurality of the horizontal planes are geometrically summed up in the vertical direction at the end, so that a 2.5 dimensional pseudo space is created.

### [GUI Screen Example (2)]

FIG. 12 illustrates a second GUI display screen example (G2) of the mobile terminal 20. This is an example in which the object 31 and the surrounding structure/space are displayed two-dimensionally (2D), and the interference state between the object 31 and the surrounding structure/space is also displayed. On this screen (G2), based on the path information d6 and the display data d5' of the path planning result, the structure 30 is displayed on a 2D X-Y plane such as an overhead layout view of a building floor as denoted by a symbol "g1", and a carry-in path such as an overall path and a partial path is also displayed as denoted by a symbol "g2". For example, in the carry-in path g2, a solid arrow part such as a red-colored display represents the partial path designated by the user, and a broken line part represents another partial path of the overall path. A circle mark represents the start point, the end point, the pass point in the middle of the path, a temporary start/end point, or others. For example, a symbol "g3" is a marker for displaying/indicating the start point of the partial path, a symbol "g4" is a marker for displaying/indicating the end point of the partial path, and a symbol "g5" is a marker such as a red-colored display for displaying the current position of the object 31. The pass point in the middle of the path or the temporary start/end point can be designated by the user.

As denoted by a symbol "g7", the surrounding structure such as a wall and an arranged material is displayed by using various types of figures such as a rectangle and a circle, a color, a character, and others. Also, when there is a surrounding structure having a high interfere possibility on the path, a surrounding structure of interest for the contact through the carry-in operation, or others as denoted by a symbol "g8", such a surrounding structure may be highlighted with a specific color. In this displaying, the result of the interference determination processing is used. Note that an outer frame of the symbol g1 represents a boundary in a range of the calculation including the interference determination (referred to as a boundary box or others).

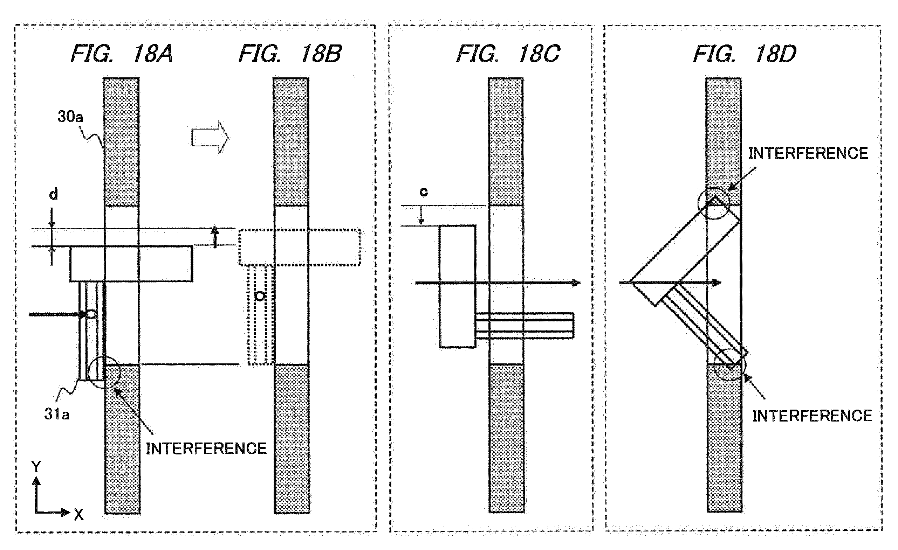

Also, in a symbol "g11", a value of a distance pitch interval for the interference determination/check is displayed, and can be variably set by the user. In the above-described interference check, while it is determined that the interference does not occur if the distance between the object 31 and the surrounding structure (30) is secured to be equal to or larger than this value, it is determined that the interference occurs if the distance therebetween is smaller than this value (see a symbol "c" of FIG. 18C described later). Additionally, on the right side, various types of related information such as the formation of the object 31, the structure 30, and the path, and an operation-instruction button are displayed.

Further, a symbol "g21" denotes a part (referred to as a posture-space information display part) for displaying the interference state on a designated path (e.g., the carrying-path g2). In the part g21, a horizontal axis and a vertical axis represent allowable ranges of the angels for defining the posture of the object 31 such as "θ: 0 to 360 degrees" and "φ: 0 to 180 degrees". A symbol "g22" denotes a marker for displaying/designating the posture/angle of the object 31. As similar to the above-described Voronoi space (FIG. 11), the interference and non-interference states in this posture are shown separately from each other by two types of regions such as a red color: the interference occurs, and a blue color: the interference does not occur. For example, the user can perform the operation so that the interference does not occur while observing the information displayed on the screen (G2).

### [GUI Screen Example (3)]

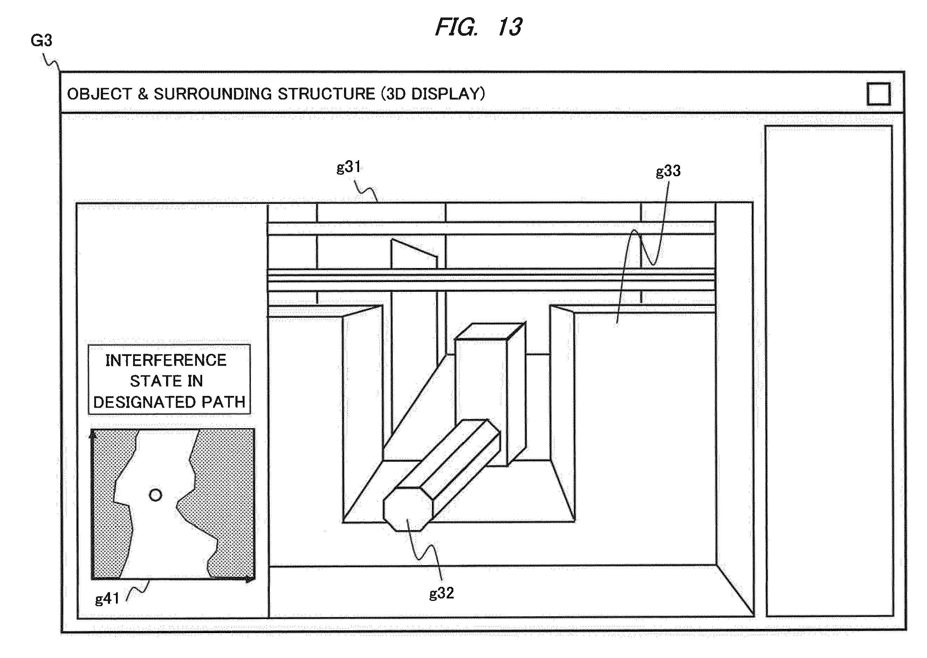

FIG. 13 illustrates a third GUI display screen example (G3) in the mobile terminal 20. This is an example in which the object 31 and the surrounding structure/space are displayed three-dimensionally (3D), and in which an interference state between the object 31 and the surrounding structure/space is displayed. On this screen (G3), the space of the structure 30 is shown as a 3D image as denoted by a symbol "g31" based on the path information d6 and the display data d5' of the path planning result. Also, in this 3D image (g31), the object 31 is shown as a 3D object so as to include its posture as denoted by a symbol "g32". A symbol "g32" denotes an example of the object 31 (see FIG. 15 described later). A symbol "g33" denotes an example of the surrounding structure (30) (see FIG. 16 described later). Also, a direction/display content of the 3D image g31 is, for example, a carry-in direction on the path, a front side viewed from the user or the mobile terminal 20, a front side of the object 31 viewed from the carry-in apparatus 32, or others, and can be displayed so as to be changed by the user' s operation. Further, the display content of the 3D image g31 can be shown in a form of a still image, a moving image, or others, in accordance with the GUI display data d5' and the path information d6. For example, when a position on the path is designated by the user's operation, a posture state at that position can be displayed as the still image on the screen (g31) and can be confirmed. Also, for example, when two points on the path are designated, a moving state of the object 31 on the partial path between those two points can be displayed as the moving image or an animated image on this screen and can be confirmed. Further, a symbol "g41" can denote the interference state of the object 31 as similar to g21 (the posture-space information display part) described above.

### [Posture (Angle)]

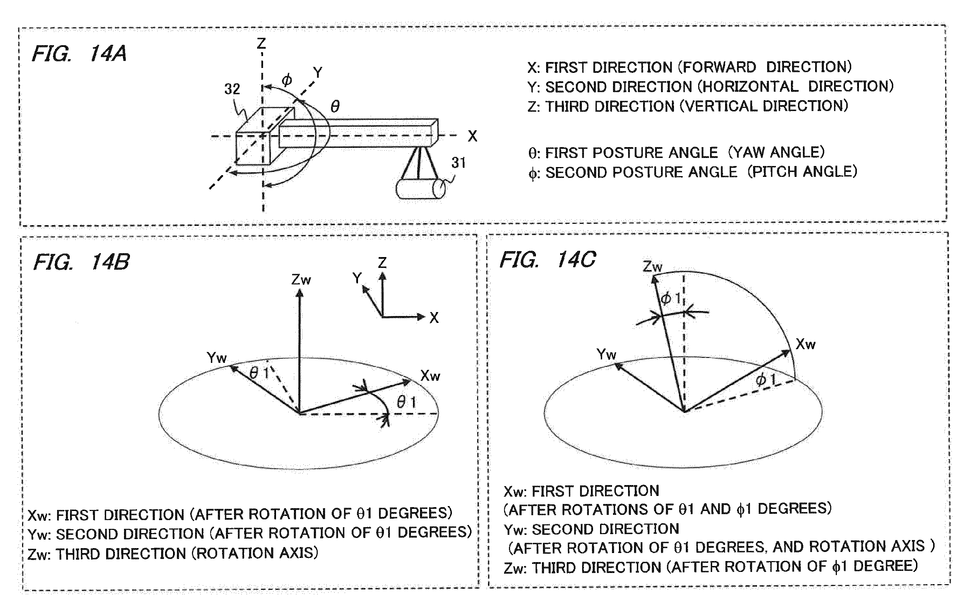

FIGs. 14A to 14C illustrate expression examples of the angles for defining the posture of the object 31. As illustrated in FIG. 14A, basically, a symbol "X" represents a first direction: a forward direction of the object 31, a symbol "Y" represents a second direction: a lateral direction of the object 31, and a symbol "Z" represents a third direction: a vertical direction of the object 31. In a case of usage of a crane (machine) as the carry-in apparatus 32, a direction in which the object 31 can be moved by manipulating the carry-in apparatus 32 includes θ: a first posture angle (yaw angle) and φ: a second posture angle (pitch angle). These angles (θ, φ) are set to be the angles for defining the posture of the object 31. The angle θ corresponds to rotation around the Z axis, and the angle φ corresponds to rotation around the Y axis.

FIG. 14B illustrates a coordinate system (Xw, Yw, Zw) obtained after the rotation by a predetermined angle (θ1) around the Z axis in the first posture angle (θ). This rotation corresponds to, for example, a horizontal swing of a head of the carry-in apparatus 32 such as the crane.

FIG. 14C illustrates a coordinate system (Xw, Yw, Zw) obtained after the further rotation by a predetermined angle (φ1) around the Y axis in the second posture angle (φ). This rotation corresponds to, for example, a vertical swing of the head of the carry-in apparatus 32 such as the crane.

As described above, in the path planning function of the present system, the calculation is performed by using posture angles corresponding to the operational characteristics such as the crane operation of the carry-in apparatus 32 and to the posture angle in accordance with anisotropy. According to the present embodiment, the two angles (θ, φ) are variable while the X axis is fixed as described above. However, depending on a condition for the carry-in apparatus 32 or others, the calculation can be performed by using a different type of the posture angle such as a roll angle for the rotation around the X axis.

The present system manages the above-described posture angels as a part of the path information d6 so as to correspond to the positional information. For example, a certain posture/angle is taken at a position in accordance with a distance of a route from the start point on the path to the position or an absolute coordinate.

### [Calculation Model]

FIG. 15 illustrates an example of a calculation model or a 3D object created by the calculation-model creation unit 103. This illustrates a case of usage of a substantially-L-shaped pipeline or others as the object 31. An actual complicated shape of the object 31 such as a 3D-CAD model shape (whose illustration is omitted) based on the object data D1 are created to be simplified as the object or the calculation model 31a as exemplified by providing a spatial margin around the shape, and is saved as the data d1 or others. For example, a part denoted by a numerical symbol "1501" indicates a case of conversion of the object into a parallelepiped element by providing the margin, and a part denoted by a numerical symbol "1502" indicates a case of conversion of the object into a columnar element whose cross-sectional surface has an octagonal shape by providing the margin. The original shape is contained inside each element region. The shape is not limited to them, and can be converted into columnar or spherical elements, a predetermined polygon/voxel data, or others. Also for the carry-in apparatus 32 and the structure 30, the simple calculation model is similarly created. How to provide the margin, that is, a magnitude of the simplification can be also adjusted by the user's setting. When the object 31 is, for example, a pipeline having a complex bent shape or having an uneven surface, a calculation volume is increased by the shape. Therefore, by converting the shape into the model with the margin as described above, the calculation time can be shortened.

### [Movement Example]

FIG. 16 illustrates a simulation example of the interference between the object 31 and the surrounding structure (30) caused by the movement/carry-in of the object 31, the simulation being performed using the calculation models or the 3D object. For example, FIG. 16 illustrates an image in a case when the calculation model 31a of the object of FIG. 15 is moved/carried so as to pass through the calculation model 30a of the surrounding structure such as a wall having a substantially concave shape of FIG. 16 (corresponding to FIG. 13). An arrow represents a movement direction and a partial path. A numerical symbol "1601" denotes the above-described gravity center of the object 31a or another reference point. A point "A" of a numerical symbol "1602" is exemplified as a position at which the interference state with the surrounding structure 30a as one point on the path.

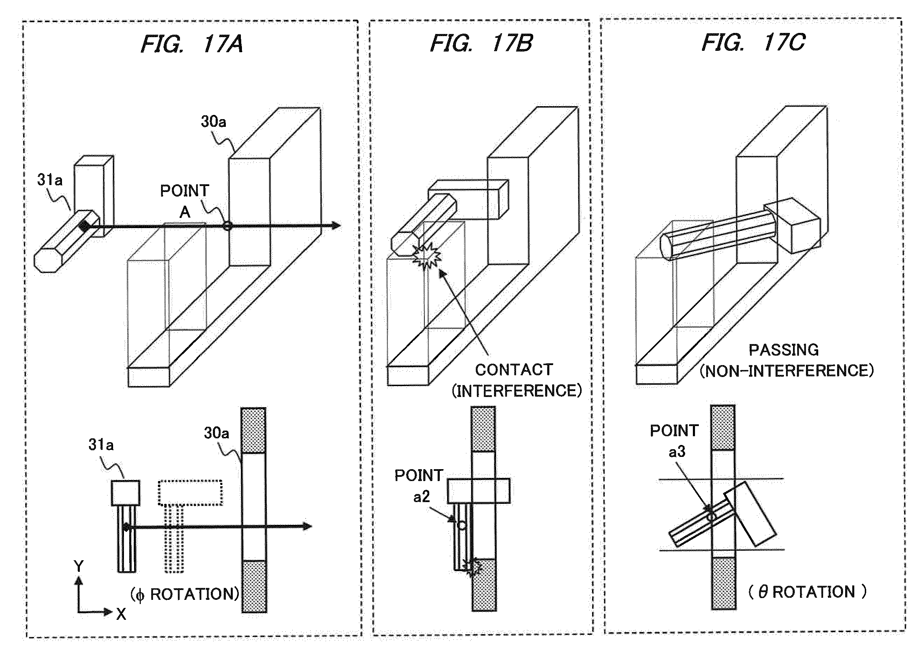

FIGs. 17A to 17C illustrate examples of state transition corresponding to the movement example of FIG. 16. FIG. 17A illustrates a state prior to the pass as similar to FIG. 16. On a lower side, the same state is illustrated on an X-Y plane. FIG. 17B illustrates a state in which the object 31a is stopped because the interfere/contact occurs at a right side of the concave part although the object 31a is tried to be moved forward from the state (a) for the passing through the surrounding structure 30a while changing the posture angle (φ) of the object 31a, that is, rotating the object 31a. FIG. 17C illustrates a state in which the object 31a is moved forward so as to pass through without interfering with the surrounding structure 30a while changing the posture angle (θ), that is, rotating the object in the non-interference state.

FIGs. 18A to 18D illustrate explanatory diagrams on the X-Y plane corresponding to the examples of FIGs. 17A to 17C. FIG. 18A illustrates the stop case because of the interference as similar to FIG. 17B. FIG. 18B illustrates a state in which the object 31a and the surrounding structure 30a do not interfere/contact with each other by parallely moving the object 31a in the Y direction from the state of FIG. 18A. A symbol "d" denotes a distance of the parallel movement in the Y direction at this time, that is, the minimum moving volume required for avoiding the interference.

Also, FIG. 18C illustrates an example of another posture state for avoiding the interference between the object 31a and the surrounding structure 30a. Further, a symbol "c" denotes the minimum margin distance between the object 31a and the surrounding structure 30a at this time. In the state of the example as illustrated in FIG. 18B, the object 31a and the surrounding structure 30a are in contact with each other, and therefore, it seems that this state virtually takes the passing-allowable posture/path. However, as illustrated in FIG. 18C, it is preferred to take such a posture/path as securing the minimum margin distance c between the object 31a and the surrounding structure 30a. Therefore, in the present system, the posture/path is drafted so as to secure the minimum margin distance c. This value c can be set by the user.

Also, FIG. 18D illustrates an example of a posture that is impossible to avoid the interference between the object 31a and the surrounding structure 30a.

In order to determine the path/posture that avoids the interference, the present system has a method/procedure providing the non-interference state by changing the posture angle of the object 31 in the case of the interference as seen in, for example, the change from FIG. 17B to FIG. 17C, and a method/procedure for the parallel movement while similarly keeping the posture angle of the object 31 as seen in, for example, the change FIG. 18A to FIG. 18B. Either of the methods/procedures can be selected when the candidates are drafted. When the optimal path is determined/evaluated from the candidates by the optimal evaluation unit 114, a higher priority is put on or a higher evaluation is provided to, for example, a path/posture taking the parallel movement than a path/posture taking the posture angle change. Alternatively, conversely, a higher priority may be put on or a higher evaluation may be provided to, for example, a path/posture taking the posture angle change than a path/posture taking the parallel movement. Depending on the operation characteristics of the object 31 and the carry-in apparatus 32, a function for the evaluation such as the priority order can be set. For example, because of the characteristics of the carry-in apparatus 32, when the horizontal-plane rotation of the object 31 (by the angle θ) is the easiest, and when the parallel movement with fixing the posture of the object 31 is the second easiest, but when the vertical-directional rotation of the object 31 (by the angle φ) is not success so much, the setting/calculation is performed so as to put the higher priority or provide the higher evaluation to a path/posture in this order.

### [Example of Interference State]

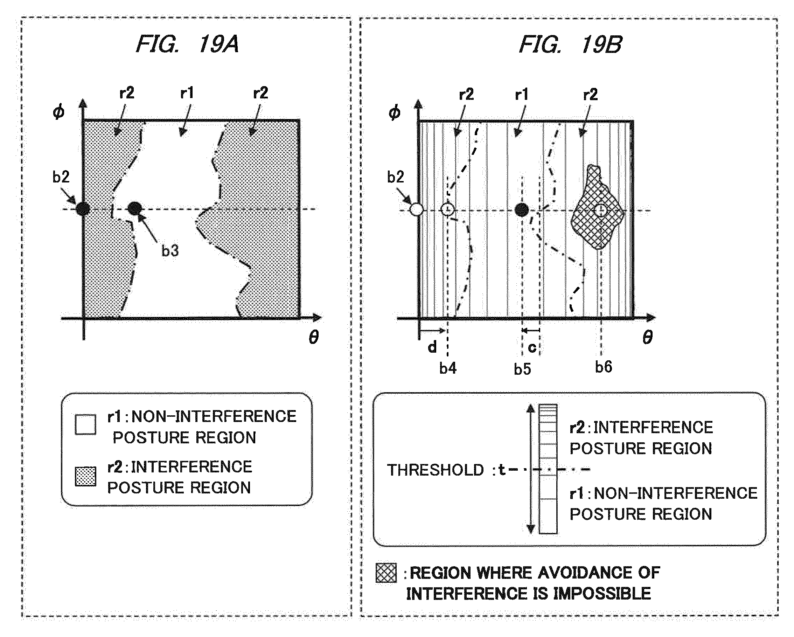

FIGs. 19A and 19B illustrate examples of a setting space and map at the point A where the interference state is provided so as to correspond to the examples as illustrated in FIGs. 16 to 18D. They illustrate the interference states at points/positions on the path as seen in g21 and g41 of the above-described screen examples. In FIG. 19A, a horizontal axis represents the first posture angle (θ), and a vertical axis represents the second posture angle (φ). FIG. 19A illustrates a case of the determination of the interference state by the binary value, a symbol "r1" denotes a posture region without the interference or the non-interference state such as blue display, and a symbol "r2" denotes a posture region with the interference such as red display. A single-dot chain line represents a boundary between both regions. Also, a point "b2" denotes the interference state with the interference corresponding to the position of the point a2 of FIG. 17B. Further, a point "b3" denotes the interference state without the interference corresponding to the position of the point a3 of FIG. 17C. As seen in the drawings, it is found out that the state is changed between the interference and the non-interference by continuously changing a certain posture angle (θ) at a certain position.

FIG. 19B illustrates the interference state or a possibility of the interference similarly caused by the angels (θ, φ) by not the binary value but a multiple value. A region with a white gradation indicates the non-interference state, and a region with a black gradation indicates the interference state. More particularly, a threshold "t" for the determination is set, and the map is divided into the regions r1 and r2 at a boundary of the threshold t. For example, the change from the point "b2" to a point "b4" corresponds to the minimum parallel-movement volume d required for avoiding the interference in the change from FIG. 18A to FIG. 18B. Also, a point "b5" denotes a position corresponding to the minimum margin distance c for avoiding the interference of FIG. 18C. Further, a region including a point "b6" is a region where the avoidance of the interference is impossible as seen in the example of FIG. 18D.

### [Calculation Processing Method]

As a calculation processing method for the path/posture, efficient and high-speed calculation is achieved by such calculation as particularly the determination in a direction from the end point such as a carry-in end point with the fixed posture toward the start point such as a carry-in start point with the arbitral posture.

### [Calculation Time and System Configuration Example]

A different system configuration/calculation method is adopted between an application case of requirement for a real-time processing or a short-time processing for the calculation time and speed of the path planning such as a case of the display of the path at an operation site as needed and an application case of non-requirement for that such as a case at the designing before the plant construction.

In the former case, the configuration of the parallel computation using the GPGPU 70, the cloud computing, or others as described above is adopted. A main calculation is performed at a high speed by the main calculation device 10 by using the parallel computation of the GPGPU 70, and the result of the calculation is referred to on the mobile terminal 20. For example, the users UA and UB of FIG. 1 can perform the operation while checking the path and others on the screen at the work site or remotely. The efficiency of the operation is achieved by the real-time display.

In the latter case, the configuration of the parallel computation using the GPGPU 70, the cloud computing, or others as described above is not necessary because only an appropriate result is acquired even if a certain period of time is required. In other words, the main calculation device 10 of the carry-in path planning system 1 is configured as, for example, a stand-alone device, the designing/planning including the path and others is previously executed by the operation by the user such as a designer, and the GUI display data or others corresponding to the path information obtained as the result of the designing/planning is stored, and is referred to later. For example, the configuration of FIG. 1 may be a configuration in which the functions of the CAD system of the design device 50 or others and the carry-in path planning system 1 are combined with each other.

### [Application Example]

There are various types of application example/usage of the present system, and the following examples are cited.

### (1) Transport Operation:

In this application, a path in a transport operation for the object 31 is planned manually and directly. In this case, it is preferred to set the minimum margin distance c or others in consideration of a space containing the object 31 by a person.

### (2) Building Construction

A carry-in/out path in a construction operation is planned while setting a building such as a plant as the structure 30 and setting a component or others configuring the building as the object 31. The condition of the structure 30 changes in correspondence to the progress of construction work.

### (3) Demolition/Removal of Building

A carry-in/out path in an operation for demolition of the structure 30 and removal of the structure as the objects 31 is planned. A condition of the structure 30 changes in accordance with the progress of the removal.

### (4) Searching at Disaster Site

A path for the searching in an operation of searching and investigating an inner place in, for example, a case in which the structure 30 is destroyed by disaster or others is planned. For example, not the user but a remote-operable robot equipped with a camera or others enters the structure 30 for the searching. An operator remotely operates the robot while checking an image/spatial condition from the robot's viewpoint on a remote screen. In this case, the path can be calculated while regarding the object 31 and the carry-in apparatus 32 as the robot. In this application, for example, the end point of the path is changed or unknown. However, as described above, the operation is achieved by repeating the calculation for the partial path. For example, the robot is provided with a part corresponding to the spatial-data acquisition device 60, the partial path is appropriately calculated in accordance with the spatial data (D4) acquired by the part, and the robot is advanced so as to follow the partial path. The condition of the structure 30 is changed in accordance with the advance of the robot and the progress of the rubble removal operation.

### [Effect and Others]

As described above, according to the present embodiment, such an efficient path, a posture of the object 31, and others as avoiding the interference between the object 31 and the surrounding structure (30) can be calculated automatically at a high speed. By reducing inefficiency due to the interference between the object 31 and the surrounding structure (30) in the fitting/rigging/removing operation to improve the efficiency of the fitting/rigging/removing operation, for example, a cost of the plant construction work or a period of time thereof can be reduced, or prevention maintenance thereof or others can be achieved. For example, also for the CAD/CAM system or others, a path through which the efficient fitting/rigging/removing operation is achieved can be planned. Particularly, the present invention can provide an optimal path in consideration of such a viewpoint as indicating what path and what posture of the object 31 can provide the efficient movement without the interference with the surrounding structure (30). In addition, particularly, the information of the optimal path or others is displayed understandably on the screen of the mobile terminal 20 observed by the user, so that the effective support for the operation can be achieved.

In the foregoing, the invention made by the inventors of the present invention has been concretely described based on the embodiments. However, it is needless to say that the present invention is not limited to the foregoing embodiments and various modifications and alterations can be made within the scope of the present invention.

### INDUSTRIAL APPLICABILITY

The present invention can be used for various types of path planning application including the transport, construction, and demolition operations, and others.

### SYMBOL EXPLANATION

1 ... carry-in path planning system, 10 ... main calculation device, 20 ... mobile terminal, 30 ... structure, 31 ... object, 32 ... carry-in apparatus, 40 ... actual operation system, 50 ... design device, 60 ... spatial-data acquisition device, 101 ... setting unit, 102 ... data input unit, 103 ... calculation-model creation unit, 104 ... interference-check data creation unit, 105 ... display-data creation unit, 111 ... path draft unit, 112 ... posture draft unit, 113 ... interference check unit, 114 ... optimal evaluation unit, 121 ... data output unit

## Claims

1. A carry-in path planning system configured to include a calculation device that performs an information processing for planning a path through which an object is carried in and out from a structure through calculation,
wherein the calculation device has a path planning function of calculating an efficient path including a posture of the object in which the object and a surrounding structure of the object do not interference with each other,
the path planning function includes:
a setting unit for setting condition information containing a start point and an end point for calculating the path, by a user's operation;
an input unit for inputting data containing three-dimensional model data of the structure and three-dimensional model data of the object;
a path draft unit for drafting a plurality of path candidates each connecting the start point to the end point by using the condition information and the input data;
a posture draft unit for drafting a plurality of posture candidates in accordance with a position of the object on the path for each of the plurality of path candidates;
an interference check unit for determining an interference state between the object and the surrounding structure of the object for the path candidate and the posture candidate; and
an output unit for outputting information of one or more efficient paths containing a posture of the object in which the object and the surrounding structure of the object do not interference with each other, based on a result of the determination on the interference state.

2. The carry-in path planning system according to claim 1, comprising:
a mobile terminal connected to the calculation device via a communication network,
wherein the mobile terminal has a GUI display function for providing a GUI screen for easily handling a processing and information provided by the path planning function by a user's operation, and
the GUI display function displays information containing an efficient path for carrying the object in and out from the structure, on the screen of the mobile terminal.

3. The carry-in path planning system according to claim 1,
wherein the calculation device includes: a CPU for performing a control processing; a main memory; and a GPGPU for performing a parallel computation processing,
a processing of the path planning function is to instruct the GPGPU from the CPU to perform a parallel computation processing for a processing of the determination on the interference state between the object and the surrounding structure of the object in the plurality of path candidates and posture candidates, to execute the parallel computation processing while assigning the processing for each path candidate and posture candidate to each of a plurality of computing cores of the GPGPU, and to store a result of the processing in the main memory.

4. The carry-in path planning system according to claim 3,
wherein the path draft unit uses the parallel computation processing of the GPGPU, and performs a processing of drafting a plurality of path candidates having a non-interference state between a shape of the object and a shape of the surrounding structure of the object.

5. The carry-in path planning system according to claim 3,
wherein the posture draft unit uses the parallel computation processing of the GPGPU, and performs a processing of drafting a plurality of posture candidates having a non-interference state between a posture of the object and the surrounding structure of the object for each of the plurality of path candidates.

6. The carry-in path planning system according to claim 1,
wherein the path planning function includes an optimal evaluation unit for selecting a path having small change in the posture as an optimal path by evaluating one or more paths including a posture of the object in which the interference state between the object and the surrounding structure of the object does not occur.

7. The carry-in path planning system according to claim 1,
wherein the path planning function includes a calculation model creation unit for creating a three-dimensional model of a simplified shape obtained by providing a spatial margin around the shapes of the object and the structure based on the input data, as model data for calculating the path.

8. The carry-in path planning system according to claim 1,
wherein the calculation device stores model data of the object and the structure in a memory, based on the input data,
the calculation device includes:
a first data creation unit for creating first data for a processing including a processing of the interference check unit of the path planning function based on the model data in the memory in the path planning, and for storing the first data in the memory; and
a second data creation unit for creating second data for displaying a GUI screen, and for storing the second data in the memory,
the path planning function uses the first data, and stores path information obtained as a result of the processing including the processing of the interference check unit of the path planning function in the memory,
the second data creation unit uses the second data, creates third data for displaying the GUI screen on which the path information is reflected, and stores the third data in the memory, and
the output unit outputs the third data in the memory.

9. The carry-in path planning system according to claim 1,
wherein the path planning function inputs three-dimensional model data of a carry-in apparatus for carrying the object in the structure, sets a calculation model obtained by combining the carry-in apparatus with the object, and calculates the efficient path by using the combining calculation model.

10. The carry-in path planning system according to claim 1,
wherein the setting unit sets a posture of the object at a carry-in end point of a carry-in path by a user's operation, as the condition information,
the path planning function searches a path including a posture of the object in which the object and the surrounding structure of the object do not interfere with each other while shifting a position of the object by a predetermined distance in a direction from the carry-in end point to a carry-in start point on the carry-in path so as to change the posture at each position.

11. The carry-in path planning system according to claim 1,
wherein the setting unit sets a partial path extending from a temporary start point to a temporary end point which passes in the middle from a carry-in start point of an overall carry-in path to a carry-in end point of the overall carry-in path by a user's operation, as the condition information, and
the path planning function calculates an efficient path including a posture of the object in which the object and the surrounding structure of the object do not interfere with each other while taking the partial path as a range of the calculation.

12. The carry-in path planning system according to claim 1, comprising a design device connected to the calculation device via a communication network,
wherein the design device manages design data containing data of a three-dimensional shape including the object and the structure, and
the input unit of the calculation device acquires the design data as the input data from the design device.

13. The carry-in path planning system according to claim 1, comprising a spatial-data acquisition device connected to the calculation device via a communication network,
wherein the spatial-data acquisition device performs a processing of capturing an image of a space inside the structure to acquire spatial data of a tree-dimensional shape, and
the input unit of the calculation device acquires the spatial data of the spatial-data acquisition device as the input data.

14. The carry-in path planning system according to claim 1, comprising an actual operation device connected to the calculation device via a communication network,
wherein the actual operation device controls an operation of a carry-in apparatus for carrying the object in the structure, and
control information in accordance with the efficient path is transmitted from the calculation device to the actual operation device, and operation control information in accordance with the control information is transmitted from the actual operation device to the carry-in apparatus, so that the object is moved by the carry-in apparatus on the efficient path.

15. The carry-in path planning system according to claim 2,
wherein, on a first screen displayed by the GUI display function, information of a start point and an end point, a current position of the object, a posture of the object in accordance with the position, and an angle for defining the posture in a carry-in path or a carry-out path is displayed as information of an efficient path through which the object is carried in/out from the structure.

16. The carry-in path planning system according to claim 2,
wherein, on a second screen displayed by the GUI display function, information containing a two-dimensional plane image of the structure and an image of the object overlapped with the plane and positioned on the efficient path is displayed.

17. The carry-in path planning system according to claim 2,
wherein, on a third screen displayed by the GUI display function, information containing a three-dimensional spatial image of the structure and a three-dimensional image of the object overlapped with the space and positioned on the efficient path is displayed.

18. The carry-in path planning system according to claim 2,
wherein, on a screen displayed by the GUI display function, information indicating an interference state between the object and the surrounding structure of the object at a position on the path is displayed, and,
as the information indicating the interference state, information indicating whether the interference occurs or not is displayed at a point determined by two angles for defining a posture of the object, the two angles being taken on a horizontal axis and a vertical axis.

19. The carry-in path planning system according to claim 1,
wherein, if interference occurs as an interference state between the object and the surrounding structure of the object at a position on the path, the path planning function searches a position and a path having a non-interference state by parallely moving the object from the position by the minimum volume, and then, if the path having the non-interference state is not found by the parallel movement, the path planning function searches the position and the path having the non-interference state by changing an angle for defining a posture of the object from the position.

20. The carry-in path planning system according to claim 1,
wherein the setting unit sets the minimum margin distance to be secured between the object and the surrounding structure of the object by a user's operation, and,
if the minimum margin distance can be secured between the object and the surrounding structure of the object when the interference state between the object and the surrounding structure of the object is determined at a position on the path, an interference check unit of the path planning function determines that the interference does not occur, and, if the minimum margin distance cannot be secured, the interference check unit determines that the interference occurs.
